# EUROPÄISCHE PATENTSCHRIFT

(11) **EP 2 238 516 B1**
(45) Veröffentlichungstag und Bekanntmachung des Hinweises auf die Patenterteilung: **25.04.2012**
(21) Anmeldenummer: 09708767.0
(22) Anmeldetag: 04.02.2009
(51) Int. Cl.: G03H 1/18, B42D 15/10, B42D 15/00

(54) **VERFAHREN ZUR HERSTELLUNG VON SICHERHEITSELEMENTEN DURCH INDIVIDUALISIERUNG VON VOLUMENHOLOGRAMMEN UND DAMIT HERGESTELLTE SICHERHEITSELEMENTE**
METHOD FOR PRODUCING SECURITY ELEMENTS BY INDIVIDUALIZATION OF VOLUME HOLOGRAMS AND SECURITY ELEMENTS PRODUCED THEREWITH
PROCÉDÉ DE FABRICATION DES ÉLÉMENTS DE SÉCURITÉ PAR INDIVIDUALISATION D'HOLOGRAMMES VOLUMIQUES ET ÉLÉMENTS DE SÉCURITÉ AINSI FABRIQUÉS

(30) Priorität: 04.02.2008 DE 102008007620
(43) Veröffentlichungstag der Anmeldung: 13.10.2010
(73) Patentinhaber: Hologram Industries Research GmbH, 85652 Pliening-Ottersberg (DE)
(72) Erfinder: MENZ, Irina, 85630 Grasbrunn (DE); HUET, Philippe, 91700 Saint Geneviève des Bois (FR)
(74) Vertreter: Farago, Peter Andreas
(86) Internationale Anmeldenummer: PCT/DE2009/000147
(87) Internationale Veröffentlichungsnummer: WO 2009/097838

(56) Entgegenhaltungen:
- WO-A-2005/091085
- WO-A-2007/131496
- GB-A- 2 452 066
- US-A- 5 856 048
- RUDOLF L. VAN RENESSE: "Optical Document Security" 2005, ARTECH HOUSE , BOSTON LONDON , XP002529816 Seite 115 - Seite 127

## Beschreibung

Die Erfindung bezieht sich auf ein Verfahren zur Herstellung von Sicherheitselementen durch Individualisierung von Volumenhologrammen bei der Applikation auf Wert- und Personaldokumenten, wie Reisepässen, Personalausweisen, Kreditkarten, sowie auf durch das Verfahren hergestellte Sicherheitselemente.

Es ist bekannt, dass Volumenhologramme, insbesondere Fleflexionsphotopolymerhologramme, bei Kontakt mit monomerhaltigen Schichten schwellen und aufgrund der Vergrößerung der Bragg'schen Netzebenenabstände ihre Farbe und Bandbreite ändern, wie in der DE 68 905 610 T2 beschrieben. Das Schwellen wird durch Eindiffundieren von beweglichen Monomeren verursacht und kann beispielsweise durch UV-Licht oder Wärme infolge einsetzender Polymerisation zu unbeweglichen Makromolekülen gestoppt werden.

Aus der WO 95/13568 ist bekannt, dass Reflexionsvolumenhologramme auf Polymerbasis bei längerem Kontakt mit monomerhaltigen, lichtvernetzbaren, so genannten Colortuningfilmen in ihrem Beugungswirkungsgrad verstärkt werden können und die Farbigkeit der Hologramme nach längeren Wellenlängen infolge Quellung der holographischen Netzebenen verschoben werden kann. Wird durch Belichtung durch eine optische Maske dieser Colortuningprozess in bestimmten Arealen vorzeitig gestoppt, dann können visuell sichtbare individuelle Informationen in das Reflexionshologramm eingebracht werden. Nach der Individualisierung wird der Colortuningfilm wieder vom Hologramm abgezogen.

In der DE 10 2006 023 159 A1 und der WO 2007/131 496 A1 wird ein Verfahren beschrieben, bei dem das monomerhaltige lichtvernetzende Quellmittel auch in flüssiger Form, beispielsweise als UV-Lacke oder lichthärtbare Klebstoffe, vollflächig mit dem Reflexionsvolumenhologramm in Kontakt gebracht wird und durch eine optische Maskenbelichtung individuelle Daten im Reflexionshologramm erzeugt werden, mit dem Vorteil, dass nach abschließender Flutbelichtung das Quellmittel auf dem Hologramm verbleibt. Das Personaldokument hat üblicherweise die gedruckten bzw. durch Lasergravur erzeugten Personaldaten aus Sicherheitsgründen nicht auf der Dokumentoberfläche, sondern in darunter liegenden Substratschichten des Dokumentes, um Manipulationen zu verhindern bzw. die Langlebigkeit zu garantieren. Die Quantität der Hotogrammindividualisierung während des Verklebens mit dem Dokument, hängt neben der Abbildungsqualität der verwendeten optischen Maske in hohem Maße auch von der Sauberkeit und Ebenheit der Dokumentenoberfläche ab. Staubpartikel, Einkerbungen und Kratzer verursachen beispielsweise ein unregelmäßiges Tunen, was insbesondere im Gebiet der mittels Maskenbelichtung erzeugten individuellen holografischen Daten, beispielsweise im Passbildbereich, zu Fehlern führt.

In der DE 10 2006 048 768 A1 wird ein Colortuning-Verfahren beschrieben, das keine optische Maske benötigt. Es wird ein flüssiges Quellmittel, beispielsweise eine druckbare Tinte, selektiv mittels Tintenstrahldruck auf das Reflexionsvolumenhologramm aufgebracht und nach einer gewissen Einwirkzeit, während der Monomere aus der Tinte in das Hologramm diffundieren können, das Quellmittel mittels Licht oder Wärme ausgehärtet. Die Detailtreue der auf diese Weise erhaltenen holographischen Informationen ist allerdings begrenzt, da bis zum Zeitpunkt der Tintenfixierung die Tinte verlaufen kann.

Aufgabe der Erfindung ist es somit, ein Verfahren oben genannter Gattung sowie damit hergestellte Sicherheitselemente anzugeben, durch welche verbesserte Sicherheitslösungen zum Fälschungsschutz von Wert- und Personaldokumenten bereitgestellt werden.

Diese Aufgabe wird durch ein Verfahren mit den Merkmalen des Anspruchs 1 sowie durch Sicherheitselemente mit den Merkmalen der Ansprüche 10 und 11 gelöst. Vorteilhafte Ausgestaltungen sind in den entsprechend rückbezogenen Unteransprüchen gekennzeichnet.

Demgemäß werden, zur Herstellung von Sicherheitselementen durch Individualisierung von Volumenhologrammen bei der Applikation auf Wert- und Personaldokumenten, in einem ersten Schritt Informationen mit Reliefcharakter druck- oder prägetechnisch auf die Dokumentenoberfläche aufgebracht, wonach in einem zweiten Schritt ein flüssiger monomerhaltiger Klebstoff vollflächig auf die Dokumentenoberfläche aufgebracht wird. Dabei führt die Reliefstruktur der aufgedruckten Informationen zu einer Klebstoffschicht mit unterschiedlicher Dickenverteilung. Danach wird in einem dritten Schritt ein Volumenhologrammfilm auf die mit dem flüssigen Klebstoff beschichtete Dokumentenoberfläche auflaminiert und nach einer Verweilzeit, während der die Klebstoffmonomere im Reliefbereich und im relieffreien Bereich unterschiedlich stark in das Hologramm diffundieren, der Klebstoffverbund ausgehärtet.

Hierdurch werden diffraktive Informationen hergestellt, die sich positionsgenau über einer oder mehreren optischen Informationen mit Roliefcharakter auf dem Wert- oder Personaldokument befinden. Damit wird ein höchster Verknüpfungsgrad von diffraktiven und nicht-diffraktiven Informationen des Dokumentes erreicht, die einen deutlich sichtbaren Farbwechseleffekt zeigen.

Das erfindungsgemäße Verfahren ermöglicht die Herstellung diffraktiver individueller Informationen, wie beispielsweise Personaldaten, ohne dass dazu eine aufwendige optische Maskentechnik verwendet werden muß.

Der Erfindung liegt somit die Beobachtung zugrunde, dass ein homogen belichtetes Reflexionsvolumenhologramm nicht gleichmäßig shiftet, wenn man es mit flüssigem monomerhaltigen Klebstoff auf ein Substrat mit deutlich ausgeprägtem Oberflächenrelief, beispielsweise verursacht durch Kratzer oder Staub, vollflächig verklebten will.

Nachfolgend wird die Erfindung anhand von Ausführungsbeispielen unter Bezug auf die Zeichnung näher beschrieben.

Es zeigen:
- Fig. 1:: schematisch im Querschnitt ein erstes Ausführungsbeispiel, vor dem Diffundieren;
- Fig. 2:: das Ausführungsbeispiel nach Fig. 1, in einem weiterem Schritt, und
- Fig. 3:: schematisch im Querschnitt ein zweites Ausführungsbeispiel.

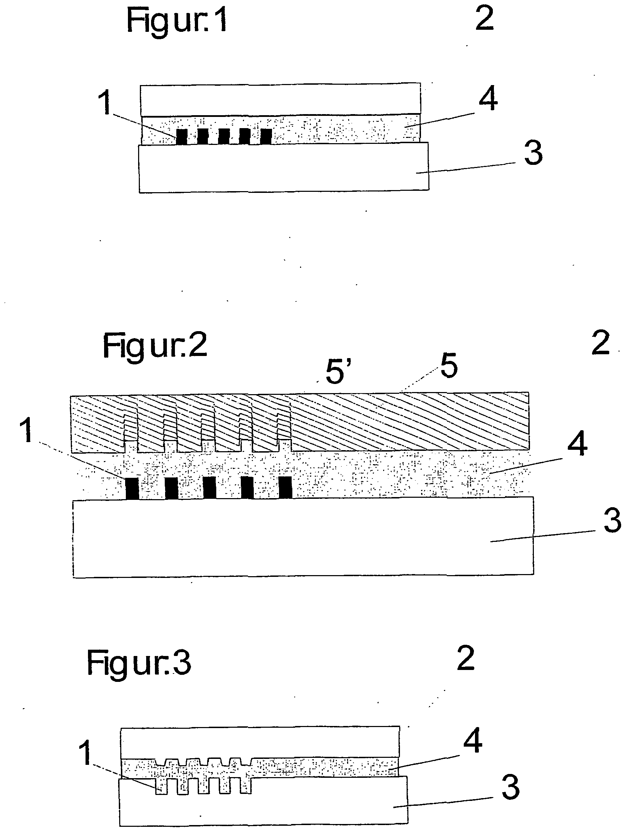

Wie aus Fig. 1 erkennbar ist, ist zur Herstellung eines erfindungsgemäßen Sicherheitselementes eine Information 1 auf die Dokumentenoberfläche 3, bevorzugterweise bestehend aus Kunststoff, wie PET, PC oder PVC, beispielsweise mit schwarzer Tinte oder Toner aufgedruckt worden. Hierfür bieten sich alle Druckverfahren an, die ein ausreichend hohes Druckfarbenrelief, Vorteilhafterweise > 2 µm, auf dem Kunststoff erzeugen.

Darüber ist auf die Dokumentoberfläche ein monomerhaltiger flüssiger Klebstoff 4, bevorzugterweise ein UV-aushärtbarer Klebstoff, vollflächig, beispielsweise in Siebdrucktechnik oder Rakeltechnik, mit einer Schichtdicke im Bereich von > 2 bis 30 µm, bevorzugter Weise 5- 20 µm, aufgebracht und darüber ist ein Volumenhologramm 2 auf das mit dem flüssigen Klebstoff beschichtete Dokument auflaminiert. Das Volumenhologramm kann ein holographisch belichteter Polymerfilm mit einer Trägerfolie sein. Vorteilhafterweise ist das belichtete Hologramm ein homogenes diffuses Reflexionsgitter oder ein holographischer Spiegel.

Infolge des gedruckten Reliefs hat der Klebstoff zwischen Dokument und Hologrammoberfläche unterschiedliche Schichtdicken. Das heißt, das Klebstoffmonomerangebot zum Diffundieren in die holographische Schicht ist unterschiedlich groß.

Wie Fig. 2 zeigt, bewirkte die Monomerangebotsdifferenz ein unterschiedliches Anschwellen des Hologramms, was sich nach Sekunden bis wenigen Minuten durch einen Farbwechsel (Colortuning) des Hologramms infolge geringerer Abstandsänderung der Bragg'schen Netzebenen 5 über dem gedruckten Relief im Vergleich zu den über den relieffreien Gebieten liegenden Netzebenen 5 bemerkbar macht. So befindet sich das Hologramm über den relieffreien Gebieten stärker in das langweiligere Spektralgebiet geschoben als über dem Relief. Nach Erreichen der gewünschten Farbänderung wurde der Klebstoff vollflächig ausgehärtet, beispielsweise mit UV-Licht oder Wärme.

Als vorteilhaft hat sich erwiesen, wenn das gedruckte erhabene Relief aus porösem Material, beispielsweise aus Toner besteht, der beim Laserdruck und Thermotransferdruck eingesetzt wird. So kann eine zusätzliche örtliche Monomerabreicherung im Klebstoff infolge von Diffusion von dem Monomer in den Toner stattfinden.

Obwohl Monomerkonzentrationsausgleichprozesse innerhalb der Klebstoffschicht bzw. Potentialdruckänderungen infolge der dynamischen Schichtdickenzunahme der Hologrammschicht in Betracht gezogen werden müssen, überraschen die erzielten Ergebnisse in ihrer Detailtreue umso mehr. Offensichtlich ist der Klebstoffmonomerdiffusionsdruck in dem Polymer zu Beginn des Diffusionsprozesses so groß, dass infolge der Monomerabreicherung im Klebstoff die Viskosität in den dünneren Klebstoffschichtbereichen schneller ansteigt und somit die weitere Monomerdiffusion in Richtung des Polymers deutlicher herabgesetzt wird als in den dickeren Klebstoffschichtbereichen. Für eine rechnerische Interpretation dieses dreidimensionalen dynamischen Diffusionssystems nach dem zweiten Fick'schen Gesetz wären umfangreiche Messungen der zeitlichen und örtlichen Monomerkonzentrationen notwendig.

Wie in Fig. 3 prinzipiell dargestellt ist, zeigen Versuche mit Intagliodruck-, Prägedruck- sowie Nadeldruckverfahren, mit denen ein Nogativrelief in der Dokumentenoberfläche mittels Hitze und Druck erzeugt werden kann, dass in erster Linie die Klebstoffschichtdickendifferenz für den beobachteten Effekt verantwortlich ist. In diesem Fall wird das Hologramm über den relieffreien Gebieten in geringerem Maße in den langwelligeren Spektralbereich geschoren als über dem Negativrelief.

Zur Herstellung individuatisierter holographischer Personaldaten einschließlich dem Passbild wird das erfindungsgemäße Verfahren vorteilhafterweise unter Verwendung transparenter Druckertinten oder Toner ausgeführt, was die Verwendung farbiger Tinten oder Toner aber nicht ausschließt.

Für eine aussagekräftige Vergleichsprüfung der laserpersonalisierten Daten, die sich im Kartenkörper des Dokumentes befinden, mit individuellen holographischen Daten auf der Kartenoberfläche, ist es üblicherweise erwünscht, dass sich diese beiden Personaldatensätze nebeneinander auf dem Dokument befinden, um sie miteinander besser vergleichen zu können. Um dies zu erreichen, wird zunächst ein transparentes Relief, bestehend aus den Personaldaten und dem Negativ-Portrait, auf die Dokumentenoberfläche gedruckt, vorteilhafterweise im Inkjet-Verfahren mit beispielsweise 300 dpi Auflösung unter Verwendung transparenter Tinten oder mit dem Thermotransferverfahren mit 600 dpi Auflösung unter Verwendung eines transparenten Toners. Dieses gedruckte transparente Relief ist für den Betrachter unsichtbar und verdeckt nicht die darunterliegenden Dokumentendaten und andere optische Merkmale. Nach vollständiger Trocknung bzw. Fixierung des gedruckten Reliefs mit Wärme oder Licht wird der flüssige Klebstoff auf die Dokumentenoberfläche aufgebracht und das Hologramm auflaminiert. Nach wenigen Minuten tritt ein differenzierter Farbshift des Hologramms ein. Nach Erreichen des gewünschten Farbkontrastes wird der Klebstoff vollständig mit UV-Licht oder Wärme ausgehärtet. Anstatt des erhabenen transparenten Druckes kann auch eine Prägung der Individualdaten in die Dokumentenoberfläche durchgeführt werden. In diesem Fall wird das Positiv-Portrait geprägt.

Danach wird die Trägerfolie des verklebten Hologrammfilmes abgezogen. Zur Erhöhung der Kratzfestigkeit und der chemischen Stabilität der holographischen Oberfläche wird abschließend eine Oberflächenschutzlackierung oder eine Schutzfolienlamination durchgeführt.

Ein großer Vorteil dieses Verfahrens ist es, dass auf eine aufwendige, störanfällige Maskenbelichtungstechnik verzichtet werden kann.

### Bezugszeichenliste

- 1.: Information
- 2.: Volumenhologramm
- 3.: Dokumentenoberfläche, Dokument
- 4.: Klebstoff
- 5.: Netzebene
- 5'.: Netzebene, mit Abstandsänderung

## Patentansprüche

1. Verfahren zur Herstellung von Sicherheitselementen durch Individualisierung von Volumenhologrammen bei deren Applikation auf Wert- und Personaldokumenten,
beinhaltend folgende Schritte:
a.) Informationen (1) mit Reliefcharakter werden druck- oder prägetechnisch auf oder in die Dokumentenoberfläche (3) aufgebracht,
b.) danach wird ein flüssiger monomerhaltiger Klebstoff (4) vollflächig auf die Dokumentenoberfläche aufgebracht, wobei die Reliefstruktur der Informationen (1) zu einer Klebstoffschicht mit unterschiedlicher Dickenverteilung führt,
c.) schließlich wird ein Volumenhologrammfilm (2) auf die mit dem flüssigen Klebstoff (4) beschichteten Dokumentenoberfläche (3) auflaminiert und nach einer Verweilzeit, während der die Klebstoffmonomere im Reliefbereich und im relieffreien Bereich unterschiedlich stark in das Hologramm diffundiert sind und einen Farbwechsel d.h. colortuning, bewirkt haben, der Klebstoffverbund ausgehärtet.

2. Verfahren nach Anspruch 1, **dadurch gekennzeichnet,**
**dass** die druck- oder prägetechnisch aufgebrachten Informationen (1) Reliefhöhen bzw. Relieftiefen von > 2 µm aufweisen.

3. Verfahren nach Anspruch 1, **dadurch kennzeichnet,**
**dass** für die drucktechnisch aufgebrachten Informationen (1) farbige Druckfarben, Tinten oder Toner mit Farbpigmenten verwendet werden.

4. Verfahren nach Anspruch1, **dadurch gekennzeichnet,**
**dass** für die drucktechnisch aufgebrachten Informationen (1) transparente Druckfarben oder Toner verwendet werden.

5. Verfahren nach Anspruch 1, **dadurch gekennzeichnet,**
**dass** die drucktechnisch aufgebrachten Informationen (1) aus Druckfarben, Tinten oder Toner bestehen, die den Gehalt an diffusionsfähigen Klebstoffmonomeren der flüssigen Klebstoffschicht zwischen dem Volumenhologramm (5) und der Oberfläche der gedruckten Informationen herabsetzen, z. B. poröse Toner.

6. Verfahren nach Anspruch 1, **dadurch gekennzeichnet, dass** die reliefartigen Informationen (1) mit einem Prägestempel in die Dokumentenoberfläche geprägt werden.

7. Verfahren nach Anspruch 1, **dadurch gekennzeichnet,**
**dass** ein monomerhaltiger lichthärtender Klebstoff (4) verwendet wird, der in Schichtdicken von > 2 µm, vorzugsweise von 5 - 20 µm, auf die Dokumentenoberfläche aufgetragen wird.

8. Verfahren nach Anspruch1, **dadurch gekennzeichnet,**
**dass** nach der Lamination des Volumenhologrammfilmes (2) auf die Klebeschicht (4) die Klebstoffaushärtung erst nach Erreichen der gewünschten Farbänderung, d.h. colortuning, des Hologramms mittels UV-Licht oder Wärme durchgeführt wird.

9. Verfahren nach Anspruch, **dadurch gekennzeichnet,**
**dass** der Volumenhologrammfilm (2) ein Photopolymerfilm mit holographischen Gitterstrukturen ist und mindestens ein Teilbereich ein diffuses Reflexionsgitter oder ein holographischer Spiegel ist.

10. Sicherheitselement mit Farbkippeffekt zum Fälschungsschutz für Wertpapiere und Personaldokumente, hergestellt durch ein Verfahren nach mindestens einem der Ansprüche 1 bis 9, wobei das Sicherheitselement positionsgenau über der auf die Dokumentenoberfläche mit farbiger Tinte oder Toner gedruckten oder geprägten Information angeordnet ist und in seinem Informationsgehalt exakt der gedruckten oder geprägten Information (1) entspricht.

11. Sicherheitselement mit individuellen holographischen Personaldaten und Passbild zum Fälschungsschutz von Wertpapieren und Dokumenten, hergestellt durch ein Verfahren gemäß mindestens einem der Ansprüche 1 bis 9, wobei auf der Oberfläche des Dokuments, in dessen Kartenkörper sich z. B. laserpersonalisierte Daten befinden, ein transparentes Relief, bestehend aus den Personaldaten und dem Negativ-Portrait, aufgedruckt sich befindet und dabei die darunter liegenden Dokumentendaten und andere optische Merkmale nicht verdeckt.

## Claims

1. Method for the production of security elements by individualization of volume holograms in case of their application on documents of value and personal documents, including the following steps:
a.) information (1) with relief character is applied on or into the document surface (3) by printing or by embossing techniques,
b.) subsequently, a liquid monomer-containing adhesive (4) is applied to the entire document surface, with the relief structure of the information (1) leading to an adhesive layer with varying distribution of thickness,
c.) finally, a volume hologram film (2) is laminated onto the document surface (3) coated with the liquid adhesive and after a holding time during which the adhesive monomers have diffused into the hologram to different extents in the relief area and in the non-relief area and have caused a change in color, i. e. color tuning, the adhesive composite is cured.

2. Method according to Claim 1, **characterized in that** the information (1) applied by printing or by embossing techniques has relief heights or relief depths, respectively, of > 2 µm.

3. Method according to Claim 1, **characterized in that** for the information (1) applied by printing techniques, colored printing dyes, inks or toners with color pigments are used.

4. Method according to Claim 1, **characterized in that** for the information (1) applied by printing techniques, transparent printing dyes or toners are used.

5. Method according to Claim 1, **characterized in that** the information (1) applied by printing techniques consists of printing dyes, inks or toners which reduce the content of diffusible adhesive monomers of the liquid adhesive layer between the volume hologram (5) and the surface of the printed information, e. g. porous toners.

6. Method according to Claim 1, **characterized in that** the relief-like information (1) is embossed into the document surface with a embossing die.

7. Method according to Claim 1, **characterized in that** a monomer-containing, light curing adhesive (4) is used which is applied onto the document surface in layer thicknesses of > 2µm, preferably 5-20 µm.

8. Method according to Claim 1, **characterized in that** after lamination of the volume hologram film (2) onto the adhesive layer (4), adhesive curing is performed by means of UV light or heat only after the desired change in color, i. e. color tuning, of the hologram has been achieved.

9. Method according to Claim 1, **characterized in that** the volume hologram film (2) is a photopolymer film with holographic grid structures and at least a portion is a diffuse reflection grid or a holographic mirror.

10. Security element with color tilting effect for protecting papers of value and personal documents against fraud, produced by a method according to at least one of Claims 1 through 9, where the security element is positioned precisely above the information printed or embossed on the document surface with colored ink or toner and where its information content corresponds precisely to the printed or embossed information (1).

11. Security element with individual holographic personal data and passport photograph for protecting papers of value and documents against fraud, produced by a method according to at least one of Claims 1 through 9, where a transparent relief, consisting of the personal data and the negative portrait, is printed onto the surface of the document in whose card body e.g.
laser-personalized data are located, with the relief not hiding the document data and other optical features below it.

## Revendications

1. Procédé de fabrication d'éléments de sécurité par individualisation d'hologrammes volumiques lors de leur application à des documents de valeur et personnels,
contenant les étapes suivantes:
a.) des informations (1) avec un caractère de relief sont appliquées, par une technique d'impression ou d'embossage, sur, ou dans la surface de document (3),
b.) ensuite, un adhésif (4) liquide, contenant un monomère, est appliqué sur la totalité de la surface, sur la surface des documents, la structure à relief de l'information (1) menant à une couche d'adhésif à distribution d'épaisseur différente,
c.) enfin, un film d'hologramme volumique (2) est appliqué, de manière stratifiée, sur la surface de document (3) revêtue de l'adhésif (4) liquide et, après expiration d'un temps de séjour, pendant lequel les monomères d'adhésif, dans la zone à relief et dans la zone exempte de relief, sont diffusés de manière différemment forte dans l'hologramme et ont provoqué un changement de couleur, c'est-à-dire un colortuning, le composite d'adhésif est durci.

2. Procédé selon la revendication 1, **caractérisé en ce que** les informations (1), appliquées par une technique d'impression ou d'embossage, présentent des hauteurs de relief ou des profondeurs de relief > 2 µm.

3. Procédé selon la revendication 1, **caractérisé en ce que** des encres d'impression colorées, des encres colorées, ou un agent de contraste avec des pigments de couleur sont utilisés pour les informations (1) appliquées par une technique d'impression.

4. Procédé selon la revendication 1, **caractérisé en ce**
**que** des encres d'impression transparentes ou un agent de contraste sont utilisés pour les informations (1) appliquées par une technique d'impression.

5. Procédé selon la revendication 1, **caractérisé en ce que** les informations (1) appliquées par une technique d'impression sont composées d'encres d'impression, d'encres, ou d'un agent de contraste, produisant une diminution de la teneur en monomères d'adhésif, aptes à la diffusion, de la couche d'adhésif liquide, entre l'hologramme volumique (5) et la surface des informations imprimées, par exemple des agents de contraste poreux.

6. Procédé selon la revendication 1, **caractérisé en ce que** les informations (1) du genre de relief sont façonnées tridimensionnellement dans la surface de document en utilisant un poinçon d'embossage.

7. Procédé selon la revendication 1, **caractérisé en ce qu'**un adhésif (4) durcissant à la lumière, contenant un monomère, est appliqué sur la surface de document en des épaisseurs de couche > 2 µm, de préférence dans la fourchette comprise entre 5 et 20 µm.

8. Procédé selon la revendication 1, **caractérisé en ce que**, après stratification du film d'hologramme volumique (2) sur la couche d'adhésif (4), le durcissement de l'adhésif est effectué ensuite, après atteinte de la modification de couleur souhaitée, c'est-à-dire le colortuning, de l'hologramme, au moyen d'une lumière UV ou au moyen de chaleur.

9. Procédé selon la revendication 1, **caractérisé en ce que** le film d'hologramme volumique (2) est un film de photopolymère, avec des structures de réseau holographiques, et au moins une zone partielle est un réseau de réflexion diffus ou un miroir holographique.

10. Elément de sécurité avec effet de basculement des couleurs, pour la protection contre la falsification pour des papiers valeur et des documents personnels, fabriqués par un procédé selon au moins l'une des revendications 1 à 9, l'élément de sécurité étant disposé, en position précise, sur l'information imprimée ou embossée sur la surface de document avec une encre de couleur ou un agent de contraste de couleur, et correspondant, quant à sa teneur en information, exactement à l'information (1) imprimée ou embossée.

11. Elément de sécurité avec des données personnelles holographiques individuelles et une image d'identité pour la protection contre la falsification de papiers valeur et de documents, fabriqués par un procédé selon au moins l'une des revendications 1 à 9, sachant que, sur la surface du document, dans son corps de carte, se trouvent des données, personnalisées par exemple par laser, un relief transparent, composé des données personnelles et du portrait en négatif, est appliqué par impression et les données de document sous-jacentes et d'autres caractéristiques optiques n'étant alors pas masquées.
